# EUROPEAN PATENT SPECIFICATION

(11) **EP 4 246 873 B1**
(45) Date of publication and mention of the grant of the patent: **26.02.2025**
(21) Application number: 21891178.2
(22) Date of filing: 11.11.2021
(51) Int. Cl.: H04L 9/08, H04L 9/32, G06F 21/00

(54) **METHOD AND SYSTEM FOR CHANGING KEY IN SECURITY MODULE**
VERFAHREN UND SYSTEM ZUM SCHLÜSSELWECHSEL IN EINEM SICHERHEITSMODUL
PROCÉDÉ ET SYSTÈME DE CHANGEMENT DE CLÉ DANS UN MODULE DE SÉCURITÉ

(30) Priority: 16.11.2020 CN 202011282164
(43) Date of publication of application: 20.09.2023
(73) Proprietor: Hangzhou Hikvision Digital Technology Co., Ltd., Hangzhou, Zhejiang 310051 (CN)
(72) Inventor: LIU, Chao, Hangzhou, Zhejiang 310051 (CN); YANG, Wenwei, Hangzhou, Zhejiang 310051 (CN); KANG, Weichang, Hangzhou, Zhejiang 310051 (CN)
(74) Representative: Goddar, Heinz J.
(86) International application number: PCT/CN2021/130021
(87) International publication number: WO 2022/100658

(56) References cited:
- WO-A1-2010/045823
- CN-A- 109 448 197
- CN-A- 110 782 567
- CN-A- 111 582 422
- CN-A- 112 422 281
- US-A1- 2006 059 547
- US-A1- 2020 119 915

## Description

### TECHNICAL FIELD

The present application relates to the field of security technology, in particular to methods and systems for changing a key in a secure element.

### BACKGROUND

The secure element (SE) has the functions of symmetric and asymmetric encryption and decryption, secure storage and identity authentication, and the SE further has the characteristics of small size and convenient installation. Therefore, the SE is widely used in various scenarios, for example, the SE can be applied in the scenarios of access control devices, mobile payment devices and financial cards.

When applying the SE in various scenarios, the SE needs to be welded on the corresponding equipment to use SE to store data, keys and other files of the user. In most cases, before a device installed with the SE leaves the factory, the key needs to be written into the SE through a specific card. However, for the user of the device, in order to ensure security, the key stored in the SE may need to be changed when the device is first used, or the key stored in the SE may need to be regularly updated during the use of the device.

Because it is necessary to use a specific card when writing a key into the SE in the device, but for the device, the specific card may not exist in the device. Therefore, when the key stored in the SE needs to be changed, the SE needs to be removed from the device, which undoubtedly increases the operational complexity of changing the key.

It can be seen that when the key stored in SE is changed by using relevant technologies, the device structure needs to be changed, and the operation is relatively complex.

### SUMMARY

Embodiments of the present application adopts the following technical solutions.

In a first aspect, an embodiment of the present application provides a method for changing a key in a secure element, applied to a smart device installed with the secure element, including:
after a connection between a key changing device and the smart device is established, obtaining a key changing instruction sent by the key changing device, where the key changing instruction is configured to change a target key under a designated directory in the secure element;
verifying whether the smart device has a first authority to read a new key from the key changing device, and whether the smart device has a second authority to change the target key in the secure element;
in response to determining that the smart device has the first authority and the second authority, reading the new key stored in the key changing device, where the new key is written into the key changing device via a card writer in advance; and
changing the target key under the designated directory in the secure element to the new key.

Optionally, verifying whether the smart device has the first authority to read the new key from the key changing device including:
performing external authentication on the key changing device; and in response to determining that the external authentication of the key changing device is successful, determining that the smart device has the first authority to read data from the key changing device.

Optionally, performing the external authentication on the key changing device includes:
based on an encryption key stored in the secure element, encrypting a first random number generated by the key changing device to obtain a first ciphertext data corresponding to the first random number;
sending an external authentication instruction carrying the first ciphertext data to the key changing device, such that the key changing device performs external authentication based on the first ciphertext data, and in response to determining that the external authentication is successful, the key changing device modifies a state value of a security state register corresponding to a directory of the new key to a first state value, wherein the first state value indicates that the new key under the directory to which the new key belongs is readable.

Optionally, verifying whether the smart device has the second authority to change the target key in the secure element includes:
performing external authentication on the secure element; and in response to determining that the external authentication of the secure element is successful, determining that the smart device has the second authority to change the key in the secure element.

Optionally, performing the external authentication on the key changing device includes:
sending a second random number generated by the secure element to the key changing device, such that the key changing device encrypts the second random number based on an authentication key stored in the key changing device to obtain a second ciphertext data corresponding to the second random number;
obtaining the second ciphertext data generated by the key changing device; sending an external authentication instruction carrying the second ciphertext data to the secure element, such that the secure element performs the external authentication based on the second ciphertext data, and
in response to determining that the external authentication is successful, the secure element modifies a state value of a security state register corresponding to the designated directory to a second state value, wherein the second state value indicates that the target key under the designated directory is changeable.

Optionally, the key changing device includes a central processing unit (CPU) card.
In a second aspect, an embodiment of the present application provides a system for changing a key in a secure element, including a key changing device and a smart device installed with the secure element;
where the key changing device is configured to, after a connection between the key changing device and the smart device is established, send a key changing instruction to the smart device to change a target key under a designated directory in the secure element; and
the smart device is configured to receive the key changing instruction; verify whether the smart device has a first authority to read a new key from the key changing device and whether the smart device has a second authority to change the target key in the secure element; in response to determining that the smart device has the first authority and the second authority, read a new key stored in the key changing device; change the target key under the designated directory in the secure element to the new key, where the new key is written into the key changing device via a card writer in advance.

Optionally, the smart device is configured to:
perform external authentication on the key changing device; and in response to determining that the external authentication of the key changing device is successful, determine that the smart device has the first authority to read data from the key changing device.

Optionally, the smart device is configured to:
based on an encryption key stored in the secure element, encrypt a first random number generated by the key changing device to obtain a first ciphertext data corresponding to the first random number; carry the first ciphertext data in an external authentication instruction; and send the external authentication instruction to the key changing device; and
the key changing device is further configured to receive the first ciphertext data; perform external authentication based on the first ciphertext data; and in response to determining that the external authentication is successful, modify a state value of a security state register corresponding to the directory of the new key to a first state value, where the first state value indicates that the new key under the directory to which the new key belongs can be read.

Optionally, the smart device is configured to:
perform external authentication on the secure element; and in response to determining that the external authentication of the secure element is successful, determine that the smart device has the second authority to change the key in the secure element.

Optionally, the smart device is further configured to: send a second random number generated by the secure element to the key changing device;
the key changing device is further configured to encrypt the second random number based on an authentication key stored in the key changing device to obtain a second ciphertext data corresponding to the second random number; and
the smart device is further configured to obtain the second ciphertext data generated by the key changing device; and send an external authentication instruction carry the second ciphertext data to the secure element, such that the secure element performs the external authentication based on the second ciphertext data, and in response to determining that the external authentication is successful, the secure element modifies a state value of a security state register corresponding to the designated directory to a second state value, wherein the second state value indicates that the target key under the designated directory is changeable.

Optionally, the key changing device includes a CPU card.

In a third aspect, an embodiment of the present application provides an apparatus for changing a key in a secure element, applied to a smart device installed with the secure element, including:
an obtaining module configured to, after a connection between a key changing device and the smart device is established, obtain a key changing instruction sent by the key changing device, where the key changing instruction is configured to change a target key under a designated directory in the secure element;
a verifying module configured to verify whether the smart device has a first authority to read a new key from the key changing device, and whether the smart device has a second authority to change the target key in the secure element;
a reading module configured to, in response to determining that the smart device has the first authority and the second authority, read the new key stored in the key changing device, where the new key is written into the key changing device via a card writer in advance; and
a changing module configured to change the target key under the designated directory in the secure element to the new key.

In a fourth aspect, an embodiment of the present application provides a computer device, including a processor, a communication interface, a memory, and a communication bus, where the processor, the communication interface, and the memory communicate with each other through the communication bus, the memory is configured to store a computer program, and the processor is configured to execute the computer program stored in the memory to achieve any one of the methods provided in the first aspect.

In a fifth aspect, an embodiment of the present application provides a computer readable storage medium, where the storage medium stores a computer program, and the computer program when executed by a processor achieves any one of the methods provided in the first aspect.

In a sixth aspect, an embodiment of the present application provides a computer program, when the computer program is executed by a processor, achieving any one of the methods provided in the first aspect.

At least one of the above technical solutions adopted in the embodiments of the present application can achieve the following beneficial effects:
Using the technical solutions provided by the embodiments of the present application, the new key corresponding to the target key to be changed is written in the key changing device in advance, and the connection between the key changing device and the smart device is established. In this way, the smart device can obtain the key changing instruction triggered by the key changing device to change the target key under the designated directory in the secure element. After verifying that the smart device has the first authority to read the new key from the key changing device, and that the smart device has the second authority to change the target key under the designated directory in the secure element, the key in the secure element is changed based on the new key stored in the key changing device.

Through the method provided by the embodiments of the present application, without removing the secure element from the smart device, the change of the key stored in the secure element is realized, thereby greatly simplifying the changing operation of the key in the secure element. In addition, in the method provided by the embodiments of the present application, by verifying whether the smart device has the authority to read the key from the key changing device and whether the smart device has the authority to change the target key in the secure element, the security of the key in the secure element is further ensured.

### BRIEF DESCRIPTION OF THE DRAWINGS

The accompanying drawings illustrated herein are used to provide further understanding of the present application and form a part of the present application. The exemplary embodiments and descriptions of the present application are used to explain the present application, and do not constitute an improper limitation of the present application. In the attached figure:
FIG. 1 is an application scenario diagram of a method for changing a key in a secure element according to an embodiment of the present application.
FIG. 2 is a first flow diagram of a method for changing a key in a secure element according to an embodiment of the present application.
FIG. 3(a) is a directory structure diagram of a key changing device for a method of changing a key in a secure element according to an embodiment of the present application.
FIG. 3(b) is a directory structure diagram of a secure element for a method of changing a key in a secure element according to an embodiment of the present application.
FIG. 4 is a second flow diagram of a method for changing a key in a secure element according to an embodiment of the present application.
FIG. 5 is a structural diagram of a system for changing a key in a secure element according to an embodiment of the present application.
FIG. 6 is a schematic diagram of modules composition of a computer equipment according to an embodiment of the present application.

### DETAILED DESCRIPTION OF THE EMBODIMENTS

In order to make the purposes, technical solutions and advantages of the present application clearer, the technical solutions of the present application will be clearly and completely described below in conjunction with specific embodiments and corresponding drawings of the present application. The described embodiments are only a part rather than all of the embodiments of the present application. Other embodiments achieved by those of ordinary skill in the art based on the embodiments in the present application without paying creative work shall all fall within the scope of protection of the present application.

The technical solutions provided by the embodiments of the present application are described in detail below in conjunction with the accompanying drawings.

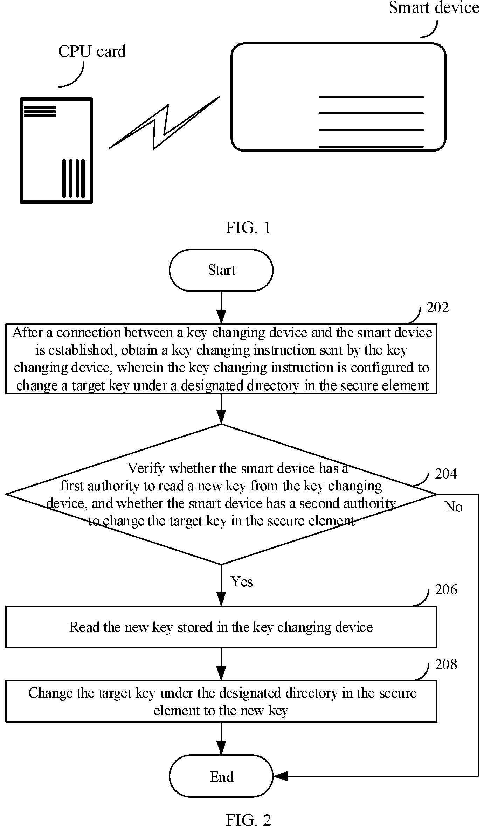

FIG. 1 shows an application scenario diagram of a method for changing a key in a secure element according to an embodiment of the present application. As shown in FIG. 1, the application scenario includes a key changing device and a smart device installed with a SE. The smart device can be any device that uses a SE such as an access control device or a mobile payment device. The key changing device stores a new key that an original key in the SE needs to be changed to. The new key stored in the key changing device can be written into the key changing device through a card writer. It can also be understood that the card writer writes the new key into the key changing device.

In this way, when a key in the SE installed in the smart device needs to be changed, the connection between the key changing device and the smart device is established. For the scenario shown in FIG. 1, taking the key changing device as a central processing unit (CPU) card as an example for illustration, when changing a key in the SE, a user can attach the CPU card in a card identification area of the smart device to establish the connection between the CPU card and the smart device. After the connection between the CPU card and the smart device is established, the smart device verifies whether the smart device has an authority to read a new key from the CPU card, and whether the smart device has an authority to change the key in the secure element. If the verification result indicates that the smart device has the above two authorities, the smart device reads the new key stored in the CPU card and changes the key in the SE to the new key.

In addition, FIG. 1 is only a schematic diagram of a possible application scenario of a method according to an embodiment of the present application, which does not constitute a limitation of the embodiment of the present application.

Optionally, multiple keys may be stored in the SE, such as an internal authentication key, an external authentication key, a master key, an encryption key, a decryption key, and an application maintenance key. In the specific implementation, one or more keys stored in the SE can be changed according to actual needs by using a method according to an embodiment of the present application.

Optionally, in an alternative implementation, a method for changing a key in a secure element according to an embodiment of the present application can be designed to use a key changing device to change one or more keys in the same sub-directory in the secure element.

In an embodiment of the present application, when multiple keys in the secure element need to be changed, multiple key changing devices can be used to change the keys, or one key changing device can be used to change the keys, which is not limited.

The secure element mentioned in the embodiments of the present application can be a security element (SE) chip.

An embodiment of the present application provides a method for changing a key in a secure element. The method is applied to a smart device installed with a secure element, that is, the execution subject of the method is the smart device installed with the secure element. Optionally, the execution subject of the method can be an apparatus for changing a key in a secure element installed in the smart device. The smart device mentioned in the embodiments of the present application can be an access control device, or a mobile payment device, etc.

FIG. 2 is a first flow diagram of a method for changing a key in a secure element according to an embodiment of the present application. As shown in FIG. 2, the method includes at least step 202, step 204, step 206 and step 208.

In step 202, after a connection between a key changing device and a smart device is established, a key changing instruction sent by the key changing device to change a target key under a designated directory in a secure element is obtained.

In step 202, after the connection between the key changing device and the smart device is established, the key changing device may send the key changing instruction to the smart device, where the key changing instruction is used to change the target key under the designated directory in the secure element; and the smart device may receive the key changing instruction sent by the key changing device.

The key changing device can include a CPU card. The CPU card is equivalent to a microcomputer. An integrated circuit in the CPU card contains a microprocessor CPU, a memory unit and a chip operating system. The key changing device has functions of data storage, command processing and data security protection.

The key changing device can be understood as an independent device. The card writer writes a new key corresponding to the key to be changed into a directory of the key changing device in advance. In this way, the smart device can change the target key in the secure element of the smart device based on the key changing device.

Optionally, in an embodiment, when the key changing device is a CPU card, the user can attach the CPU card in a card identification area of the smart device to establish the radio frequency (RF) connection between the key changing device and the smart device.

In step 202, the smart device can read the key changing instruction triggered by the key changing device through an RF module in the smart device.

In step 204, whether the smart device has a first authority to read a new key from the key changing device and whether the smart device has a second authority to change the target key in the secure element are verified; if so, step 206 is performed; otherwise, the process is ended.

Optionally, in an embodiment, the smart device can verify whether the smart device has the first authority by performing external authentication on the key changing device.

Optionally, in an embodiment, the smart device can verify whether the smart device has the second authority by performing external authentication on the secure element.

The smart device needs to have both the first and second authorities to perform the operation of changing the key in the secure element. In other cases, if the smart device has only the first authority, or only the second authority, or neither the first authority nor the second authority, the smart device cannot perform the operation of changing the key in the secure element.

In step 206, the new key stored in the key changing device is read.

The new key is written into the key changing device through the card writer in advance.

In step 208, the target key under the designated directory in the secure element is changed to the new key.

In the method for changing the key in the secure element provided by the embodiments of the present application, the new key corresponding to the target key to be changed is written in the key changing device in advance, and the connection between the key changing device and the smart device is established. In this way, the smart device can obtain the key changing instruction triggered by the key changing device to change the target key under the designated directory in the secure element. After verifying that the smart device has the first authority to read the new key from the key changing device, and that the smart device has the second authority to change the target key under the designated directory in the secure element, the key in the secure element is changed based on the new key stored in the key changing device.

Through the method provided by the embodiments of the present application, without removing the secure element from the smart device, the change of the key stored in the secure element is realized, thereby greatly simplifying the changing operation of the key in the secure element. In addition, in the method provided by the embodiments of the present application, by verifying whether the smart device has the authority to read the key from the key changing device and whether the smart device has the authority to change the target key in the secure element, the security of the key in the secure element is further ensured.

In order to understand the method provided by the embodiments of the present application, detailed implementation processes of the above steps are introduced below.

Optionally, in an embodiment, in step 204, verifying whether the smart device has the first authority to read data from the key changing device can include the following process:
performing external authentication on the key changing device; and if the external authentication for the key changing device is successful, determining that the smart device has the first authority.

Optionally, the external authentication for the key changing device can be achieved through the following process:
based on an encryption key stored in the secure element, encrypting a first random number generated by the key changing device to obtain a first ciphertext data corresponding to the first random number;
sending an external authentication instruction carrying the first ciphertext data to the key changing device, such that the key changing device performs external authentication based on the first ciphertext data, and in response to determining that the external authentication is successful, the key changing device modifies a state value of a security state register corresponding to a directory of the new key to a first state value, wherein the first state value indicates that the new key under the directory to which the new key belongs is readable.

Optionally, in an embodiment, when external authentication is required for the key changing device, the key changing device generates a random number. In the embodiments of the present application, in order to distinguish the random number generated by the key changing device from a random number generated by the secure element, the random number generated by the key changing device is named as the first random number.

After the key changing device generates the first random number, on the one hand, the first random number is temporarily stored in the key changing device, and on the other hand, the first random number is sent to the smart device, enabling that the smart device obtains the first random number from the key changing device.

The smart device obtains the encryption key stored in the secure element, uses the obtained encryption key to encrypt the first random number to obtain the first ciphertext data corresponding to the first random number, and sends the external authentication instruction to the key changing device, where the external authentication instruction carries the first ciphertext data.

The key changing device receives the external authentication instruction; obtains the first ciphertext data from the external authentication instruction, decrypts the first ciphertext data to obtain a first plaintext data; if the first plaintext data is the same as the first random number, determines that the external authentication is successful; and if the first plaintext data is different from the first random number, determines that the external authentication fails.

When the external authentication is successful, the key changing device modifies a state value of the security state register corresponding to the directory of the new key to the first state value.

Optionally, in an embodiment, when external authentication is required for the key changing device, the key changing device generates a random number. In the embodiments of the present application, in order to distinguish the random number generated by the key changing device from a random number generated by the secure element, the random number generated by the key changing device is named as the first random number.

After the key changing device generates the first random number, on the one hand, the first random number is temporarily stored in the key changing device, on the other hand, the first random number is sent to the smart device, and the smart device sends the first random number to the secure element, enabling that the secure element encrypts the first random number based on the encryption key stored in the secure element to obtain the first ciphertext data corresponding to the first random number.

The secure element returns the first ciphertext data to the smart device. The smart device sends an external authentication instruction to the key changing device, where the external authentication instruction carries the first ciphertext data.

After the key changing device receives the external authentication instruction, the key changing device encrypts the first random number based on an external authentication key in the directory to which the new key belongs, to obtain the ciphertext data corresponding to the first random number. The key changing device compares the ciphertext data encrypted by the key changing device with the first ciphertext data. If the two are the same, the key changing device determines that the external authentication of the key changing device is successful. In this case, the key changing device modifies a state value of the security state register corresponding to the directory of the new key to the first state value. The state value of the security state register being the first state value indicates that files in the directory to which the new key belongs can be read. In this case, after receiving a reading instruction for the new key sent by the smart device, the key changing device allows the smart device to read the new key stored in the directory where the new key belongs.

If the ciphertext data encrypted by the key changing device is different from the first ciphertext data, the key changing device determines that the external authentication of the key changing device fails.

In an embodiment of the present application, the directory in the key changing device can be divided into a main directory and one or more sub-directories. For the key changing device, a main directory can correspond to a security state register, and a sub-directory can correspond to a security state register.

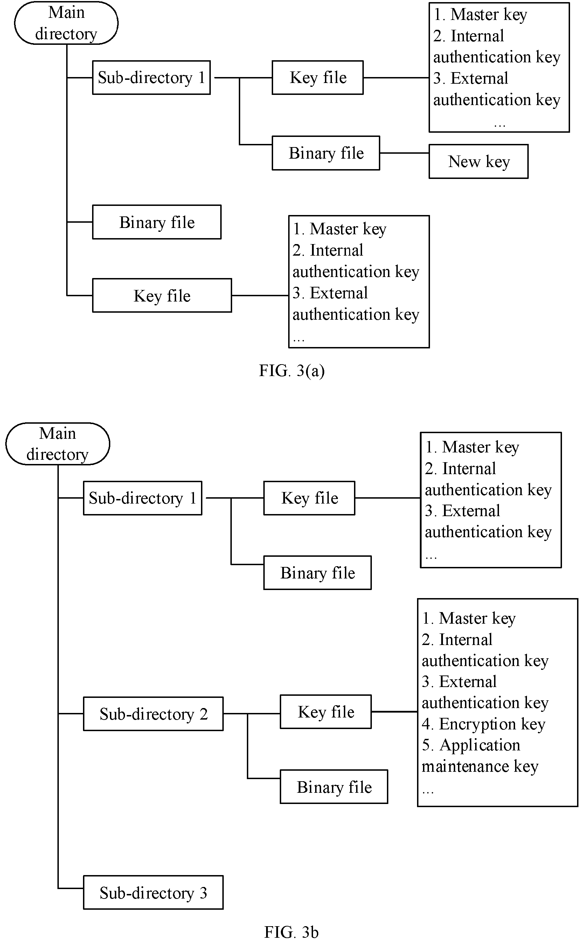

For example, in an embodiment, the directory structure corresponding to the key changing device is shown in FIG. 3(a). Under the directory structure shown in FIG. 3(a), the new key used to change the target key in the secure element is stored in a binary file under a sub-directory 1.

In this case, when the key changing device encrypts the first random number, the key changing device uses the external authentication key corresponding to the sub-directory 1 to encrypt the first random number. In addition, for the case shown in FIG. 3(a), after the external authentication of the key changing device is successful, the state value of the security state register corresponding to the sub-directory 1 is modified to the first state value. In this way, the smart device can read the new key stored in sub-directory 1.

In the embodiments of the present application, for the key changing device, a sub-directory corresponds to a security state register. In this way, after using an external authentication key corresponding to a sub-directory to perform an external authentication of the key changing device and the external authentication of the key changing device is successful, the key changing device can only modify the state value of the security state register corresponding to the sub-directory, and state values of security state registers corresponding to other sub-directories remain unchanged, thus ensuring the security of the files under other sub-directories.

Optionally, in an embodiment, in step 204, verifying whether the smart device has the second authority to change the key in the secure element can include the following process:
performing external authentication on the secure element; if the external authentication of the secure element is successful, determining that the smart device has the second authority.

Optionally, the smart device can perform external authentication on the secure element through the following process:
sending the second random number generated by the secure element to the key changing device, such that the key changing device encrypts the second random number based on an authentication key stored in the key changing device to obtain the second ciphertext data corresponding to the second random number; obtaining the second ciphertext data generated by the key changing device, and sending an external authentication instruction carrying the second ciphertext data to the secure element, such that the secure element performs the external authentication based on the second ciphertext data, and in response to determining that the external authentication is successful, the secure element modifies a state value of a security state register corresponding to the designated directory to a second state value, wherein the second state value indicates that the target key under the designated directory can be changed.

Optionally, in an embodiment, when external authentication is required for the secure element, the secure element can generate a random number. In the embodiments of the present application, in order to distinguish a random number generated by the secure element from a random number generated by the key changing device, a random number generated by the secure element is named as the second random number. After the secure element generates the second random number, on the one hand, the second random number is temporarily stored in the secure element, and on the other hand, the second random number is sent to the smart device.

After the key changing device receives the second random number, the key changing device encrypts the second random number based on an authentication key stored in the key changing device to obtain the second ciphertext data corresponding to the second random number. The smart device obtains the second ciphertext data from the key changing device and sends an external authentication instruction to the secure element, where the external authentication instruction carries the second ciphertext data.

The secure element obtains the second ciphertext data from the external authentication instruction. The secure element can decrypt the second ciphertext data to obtain the second plaintext data. If the second plaintext data is the same as the second random number, it is determined that the external authentication is successful; and if the second plaintext data is different from the second random number, it is determined that the external authentication fails.

When the external authentication is successful, the secure element modifies the state value of the security state register corresponding to the designated directory to the second state value.

Optionally, in an embodiment, when external authentication is required for the secure element, the secure element can generate a random number. In the embodiments of the present application, in order to distinguish a random number generated by the secure element from a random number generated by the key changing device, a random number generated by the secure element is named as the second random number. After the secure element generates the second random number, on the one hand, the second random number is temporarily stored in the secure element, on the other hand, the second random number is sent to the smart device, and the smart device sends the second random number to the key changing device.

The key changing device encrypts the second random number based on an internal authentication key stored in the key changing device to obtain the second ciphertext data corresponding to the second random number; and the key changing device returns the second ciphertext data to the smart device.

The smart device sends an external authentication instruction to the secure element, where the external authentication instruction carries the second ciphertext data. After the secure element receives the external authentication instruction, the secure element encrypts the second random number based on the external authentication key corresponding to the designated directory, and compares the ciphertext data encrypted by the secure element with the second ciphertext data.

If the two are the same, the secure element determines that the external authentication of the secure element is successful. In this case, the secure element modifies a state value of the security state register corresponding to the designated directory to the second state value. The state value of the security state register being the second state value indicating that the key in the designated directory can be changed. In this case, if the secure element receives the key changing instruction sent by the smart device, the secure element allows to change the target key in the designated directory.

If the ciphertext data encrypted by the secure element is different from the second ciphertext data, the secure element determines that the external authentication of the secure element fails.

In an embodiment of the present application, the directory in the secure element can be divided into a main directory and one or more sub-directories. For the secure element, a main directory can correspond to a security state register, and a sub-directory can correspond to a security state register.

For example, in an embodiment, the directory structure for the secure element is shown in FIG. 3(b). In an embodiment of the present application, a master key under the sub-directory 2 in the directory corresponding to the secure element needs to be changed. In this case, when the secure element encrypts the second random number, the secure element uses the external authentication key corresponding to the sub-directory 2 to encrypt the second random number.

For the case shown in FIG. 3(b), after the external authentication of the secure element is successful, a state value of the security state register corresponding to the sub-directory 2 is modified to the second state value. In this way, the smart device can change the master key stored in sub-directory 2.

For the secure element, a sub-directory corresponds to a security state register. In this way, after using the external authentication key corresponding to a sub-directory to perform an external authentication of the secure element and the external authentication of the secure element is successful, for the secure element, only the state value of the security state register corresponding to the sub-directory can be modified, and state values of security state registers corresponding to other sub-directories remain unchanged, thus ensuring the security of the keys under other sub-directories.

In the embodiments of the present application, the security state register is used to represent the security state of its corresponding card (secure element or key changing device). In an embodiment, the security state register can correspond to 16 security states, and the state value for each security state can be a value from 0XF0 to OXFF. One state value corresponds to one authority. For example, if the state value corresponding to the authority to read the new key from the sub-directory 1 of the key changing device is OXF2, only when the state value of the security state register corresponding to the sub-directory 1 of the key changing device is 0XF2, the smart device can read the new key under the sub-directory 1.

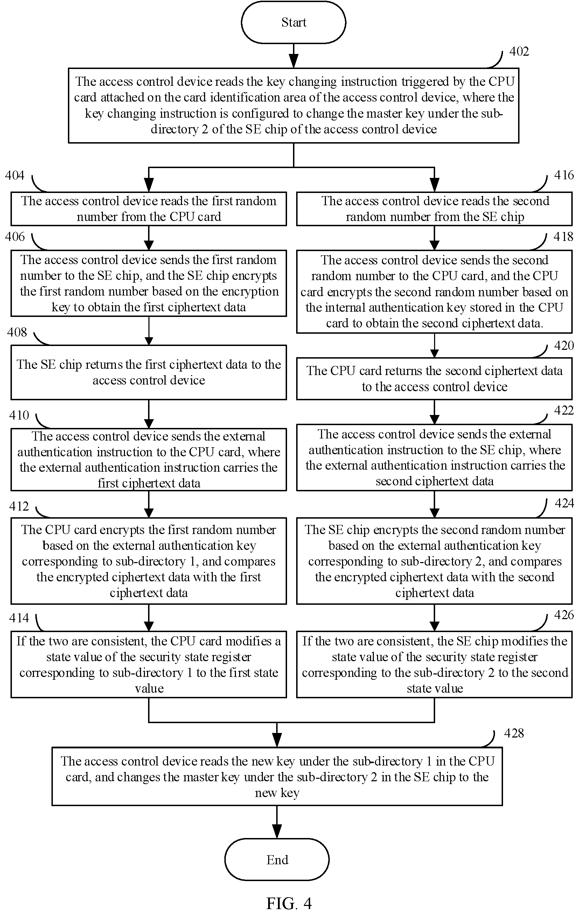

In order to understand the method provided by the embodiments of the present application, the following will take changing the master key under the sub-directory 2 in the SE chip of an access control device as an example to introduce the method provided by the embodiments of the present application, and the key changing device used is a CPU card, and the new key in the CPU card is stored in the sub-directory 1 of the CPU card. FIG. 4 is a second flow diagram of a method for changing a key in a secure element according to an embodiment of the present application. As shown in FIG. 4, the method may include step 402 to step 428.

In step 402, the access control device reads the key changing instruction triggered by the CPU card attached on the card identification area of the access control device, where the key changing instruction is configured to change the master key under the sub-directory 2 of the SE chip of the access control device.

In an embodiment of the present application, when the CPU card is attached on the card identification area of the access control device, the CPU card triggers the key changing instruction to change the master key under the sub-directory 2 of the SE chip.

In step 402, the access control device can read the key changing instruction triggered by the CPU card.

In step 404, the access control device reads the first random number from the CPU card.

In step 406, the access control device sends the first random number to the SE chip, and the SE chip encrypts the first random number based on the encryption key to obtain the first ciphertext data.

In step 406, the encryption key used by the SE chip to encrypt the first random number can be the internal authentication key.

In step 408, the SE chip returns the first ciphertext data to the access control device.

In step 410, the access control device sends the external authentication instruction to the CPU card, where the external authentication instruction carries the first ciphertext data.

In step 412, the CPU card encrypts the first random number based on the external authentication key corresponding to sub-directory 1, and compares the encrypted ciphertext data with the first ciphertext data.

In step 414, if the two are consistent, the CPU card modifies a state value of the security state register corresponding to sub-directory 1 to the first state value.

The first state value indicates that the new key under sub-directory 1 in the CPU card can be read.

In step 416, the access control device reads the second random number from the SE chip.

In step 418, the access control device sends the second random number to the CPU card, and the CPU card encrypts the second random number based on the internal authentication key stored in the CPU card to obtain the second ciphertext data.

In step 420, the CPU card returns the second ciphertext data to the access control device.

In step 422, the access control device sends the external authentication instruction to the SE chip, where the external authentication instruction carries the second ciphertext data.

In step 424, the SE chip encrypts the second random number based on the external authentication key corresponding to sub-directory 2, and compares the encrypted ciphertext data with the second ciphertext data.

In step 426, if the two are consistent, the SE chip modifies the state value of the security state register corresponding to the sub-directory 2 to the second state value.

The second state value indicates that the key under sub-directory 2 in SE chip can be changed.

In step 428, the access control device reads the new key under the sub-directory 1 in the CPU card, and changes the master key under the sub-directory 2 in the SE chip to the new key.

The specific implementation process corresponding to each step in the embodiment shown in FIG. 4 can refer to the embodiment shown in FIG. 1, which will not be repeated here.

In the embodiment shown in FIG. 4, the processes of external authentication for the CPU card in step 402 to step 414 can be performed simultaneously with the processes of external authentication for the SE chip in step 416 to step 426. Alternatively, the processes of external authentication for the CPU card may be performed first, and then the processes of the external authentication for the SE chip may be performed. Alternatively, the processes of the external authentication for the SE chip may be performed first, and then the processes of the external authentication for the CPU card may be performed. FIG. 4 shows an example where the processes of external authentication for the CPU card are performed simultaneously with the processes of external authentication for the SE chip, which does not constitute a limitation of the embodiments of the present application.

In the method for changing the key in the secure element provided by the embodiments of the present application, the new key corresponding to the target key to be changed is written in the key changing device in advance, and the connection between the key changing device and the smart device is established. In this way, the smart device can obtain the key changing instruction triggered by the key changing device to change the target key under the designated directory in the secure element. After verifying that the smart device has the first authority to read the new key from the key changing device, and that the smart device has the second authority to change the target key under the designated directory in the secure element, the key in the secure element is changed based on the new key stored in the key changing device.

Through the method provided by the embodiments of the present application, without removing the secure element from the smart device, the change of the key stored in the secure element is realized, thereby greatly simplifying the changing operation of the key in the secure element. In addition, in the method provided by the embodiments of the present application, by verifying whether the smart device has the authority to read the key from the key changing device and whether the smart device has the authority to change the target key in the secure element, the security of the key in the secure element is further ensured.

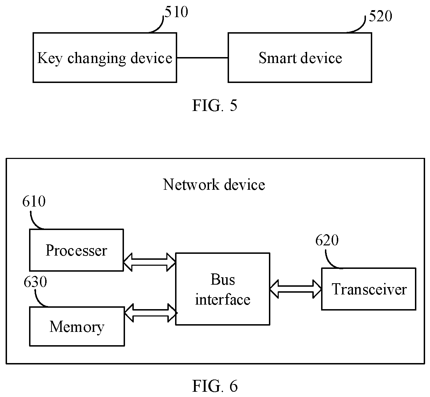

Corresponding to the methods for changing the key in the secure element provided by the embodiments of the present application, based on the same idea, an embodiment of the present application further provides a system for changing a key in a secure element. As shown in FIG. 5, the system includes a key changing device 510 and a smart device 520 installed with a secure element;
where the key changing device 510 is configured to, after a connection between the key changing device and the smart device is established, send a key changing instruction to the smart device to change a target key under a designated directory in the secure element; and
the smart device 520 is configured to receive the key changing instruction; verify whether the smart device has a first authority to read a new key from the key changing device and whether the smart device has a second authority to change the target key in the secure element; in response to determining that the smart device has the first authority and the second authority, read a new key stored in the key changing device; change the target key under the designated directory in the secure element to the new key, where the new key is written into the key changing device via a card writer in advance.

Optionally, the smart device 520 can be configured to:
perform external authentication on the key changing device; and in response determining that the external authentication of the key changing device is successful, determine that smart device has the first authority to read data from key changing device.

Optionally, the smart device 520 can be configured to:
based on an encryption key stored in the secure element, encrypt a first random number generated by the key changing device to obtain a first ciphertext data corresponding to the first random number; carry the first ciphertext data in an external authentication instruction; and send the external authentication instruction to the key changing device; and

The key changing device 510 can be further configured to receive the first ciphertext data; perform external authentication based on the first ciphertext data; and in response to determining that the external authentication is successful, modify a state value of a security state register corresponding to the directory of the new key to a first state value, where the first state value indicates that the new key under the directory to which the new key belongs can be read.

Optionally, the smart device 520 can be configured to:
perform external authentication on the secure element; and in response to determining that the external authentication of the secure element is successful, determine that the smart device has the second authority to change the key in the secure element.

Optionally, the smart device 520 can be further configured to:
send a second random number generated by the secure element to the key changing device; and
the key changing device 510 can further be configured to encrypt a second random number based on the an authentication key stored in the key changing device to obtain a second ciphertext data corresponding to the second random number; obtain the second ciphertext data generated by the key changing device; and send an external authentication instruction carrying the second ciphertext data to the secure element, such that the secure element performs external authentication based on the second ciphertext data; and when the external authentication is successful, modifies a state value of a security state register corresponding to a designated directory to a second state value, where the second state value indicates that the target key in the designated directory can be changed.

Optionally, the key changing device includes a CPU card.

For the systems for changing the key in the secure element provided by the embodiments of the present application, the specific implementation processes of the functions corresponding to the key changing device and the smart device is the same as the specific implementation processes of the steps in the embodiments of the methods corresponding to FIGs. 1-4. Therefore, for the specific implementation processes of the functions corresponding to the key changing device and the smart device, reference may be made to the embodiments of the methods corresponding to FIGs. 1-4, which will not be repeated here.

In the system for changing the key in the secure element provided by the embodiments of the present application, the new key corresponding to the target key to be changed is written in the key changing device in advance, and the connection between the key changing device and the smart device is established. In this way, the smart device can obtain the key changing instruction triggered by the key changing device to change the target key under the designated directory in the secure element. After verifying that the smart device has the first authority to read the new key from the key changing device, and that the smart device has the second authority to change the target key under the designated directory in the secure element, the key in the secure element is changed based on the new key stored in the key changing device.

Through the system provided by the embodiments of the present application, without removing the secure element from the smart device, the change of the key stored in the secure element is realized, thereby greatly simplifying the changing operation of the key in the secure element. In addition, in the system provided by the embodiments of the present application, by verifying whether the smart device has the authority to read the key from the key changing device and whether the smart device has the authority to change the target key in the secure element, the security of the key in the secure element is further ensured.

Corresponding to the methods for changing the key in the secure element provided by the embodiments of the present application, an embodiment of the present application provides an apparatus for changing a key in a secure element, applied to the smart device installed with the secure element, including:
an obtaining module configured to, after a connection between a key changing device and the smart device is established, obtain a key changing instruction sent by the key changing device, where the key changing instruction is configured to change a target key under a designated directory in the secure element;
a verifying module configured to verify whether the smart device has a first authority to read a new key from the key changing device, and whether the smart device has a second authority to change the target key in the secure element;
a reading module configured to, in response to determining that the smart device has the first authority and the second authority, read the new key stored in the key changing device, where the new key is written into the key changing device via a card writer in advance; and
a changing module configured to change the target key under the designated directory in the secure element to the new key.

In the system for changing the key in the secure element provided by the embodiments of the present application, the new key corresponding to the target key to be changed is written in the key changing device in advance, and the connection between the key changing device and the smart device is established. In this way, the smart device can obtain the key changing instruction triggered by the key changing device to change the target key under the designated directory in the secure element. After verifying that the smart device has the first authority to read the new key from the key changing device, and that the smart device has the second authority to change the target key under the designated directory in the secure element, the key in the secure element is changed based on the new key stored in the key changing device.

Through the system provided by the embodiments of the present application, without removing the secure element from the smart device, the change of the key stored in the secure element is realized, thereby greatly simplifying the changing operation of the key in the secure element. In addition, in the system provided by the embodiments of the present application, by verifying whether the smart device has the authority to read the key from the key changing device and whether the smart device has the authority to change the target key in the secure element, the security of the key in the secure element is further ensured.

Corresponding to the methods for changing the key in the secure element provided by the embodiments of the present application, an embodiment of the present application provides a computer device. As shown in FIG. 6, the computer device includes a processor 610, a transceiver 620, a memory 630 and a bus interface.

The computer device 600 further includes: a computer program stored in the memory 630 and operable on the processor 610. When the computer program is executed by the processor 610, steps of any one of the above methods for changing the key in the secure element can be achieved, and the same technical effect can be achieved. To avoid repetition, details are not repeated here.

In FIG. 6, the bus architecture may include any number of interconnected buses and bridges linking together various circuits for one or more processors represented by processor 610 and memory represented by memory 630. The bus architecture can further link together various other circuits, such as peripherals, voltage regulators, and power management circuits, etc., which are well known in the art and therefore will not be further described herein. The bus interface provides an interface to the bus architecture. The transceiver 620 may include a plurality of elements, including a transmitter and a receiver, providing a unit for communicating with various other devices over transmission media.

The processor 610 is responsible for managing the bus architecture and general processing, and the memory 630 may store data used by the processor 610 when performing operations.

Corresponding to the methods for changing the key in the secure element provided by the embodiments of the present application, an embodiment of the present application provides a computer device, including a processor, a communication interface, a memory, and a communication bus; where the processor, the communication interface, and the memory communicate with each other through the communication bus, the memory is configured to store a computer program, and the processor is configured to execute the computer program stored in the memory to achieve steps of any one of the above methods for changing the key in the secure element.

An embodiment of the present application further provides a computer-readable storage medium. A computer program is stored in the computer-readable storage medium. When the computer program is executed by a processor, steps of embodiments of the above methods for changing the key in the secure element are achieved, and the same technical effect can be achieved. To avoid repetition, details are not repeated here. The computer-readable storage medium includes, for example, a read-only memory (ROM), a random-access memory (RAM), a magnetic disk or an optical disk.

An embodiment of the present application further provides a computer program. When the computer program is executed by a processor, the steps of any one of the embodiments of the above methods for changing the key in the secure element can be achieved, and the same technical effect can be achieved. To avoid repetition, details are not repeated here.

It should be noted that, in this document, the term "include", "include" or any other variation thereof is intended to cover non-exclusive inclusion, such that a process, method, article, or device that includes a set of elements includes not only those elements, but also other elements that are not explicitly listed, or other elements that are inherent to such a process, method, commodity, or device. Without further limitation, the element defined by the statement "including a ..." do not preclude the existence of additional identical elements in the process, method, article, or apparatus that include the element.

Through the description of the above embodiments, those skilled in the art can clearly understand that the methods of the above embodiments can be implemented by means of software plus a necessary general-purpose hardware platform, and of course also by hardware, but in many cases the former is a better implementation. Based on this understanding, the essence of the technical solutions of the present application or the part of the technical solutions of the present application that contributes to related technologies can be embodied in the form of a computer software product, and the computer software product is stored in a storage medium (such as ROM, RAM, magnetic disk, optical disk, etc.). The computer software product includes several instructions to enable a terminal (such as a mobile phone, computer, server, air conditioner, or network device, etc.) to execute the methods described in various embodiments of the present application.

The embodiments of the present application have been described above in conjunction with the accompanying drawings, but the present application is not limited to the above-mentioned specific embodiments. The above-mentioned specific embodiments are only illustrative and not restrictive. Under the enlightenment of the present application, those skilled in the art, without departing from the purpose of the present application and the scope of protection of the claims, can also make many forms, all of which belong to the protection of the present application.

## Claims

1. A method for changing a key in a secure element, applied to a smart device installed with the secure element, comprising:
after a connection between a key changing device and the smart device is established, obtaining (202) a key changing instruction sent by the key changing device, wherein the key changing instruction is configured to change a target key under a designated directory in the secure element;
verifying (204) whether the smart device has a first authority to read a new key from the key changing device, and whether the smart device has a second authority to change the target key in the secure element;
in response to determining that the smart device has the first authority and the second authority, reading (206) the new key stored in the key changing device, wherein the new key is written into the key changing device via a card writer in advance; and
changing (208) the target key under the designated directory in the secure element to the new key.

2. The method according to claim 1, wherein verifying whether the smart device has the first authority to read the new key from the key changing device comprising:
performing external authentication on the key changing device; and
in response to determining that the external authentication of the key changing device is successful, determining that the smart device has the first authority to read data from the key changing device.

3. The method according to claim 2, wherein performing the external authentication on the key changing device comprises:
based on an encryption key stored in the secure element, encrypting a first random number generated by the key changing device to obtain a first ciphertext data corresponding to the first random number; and
sending an external authentication instruction carrying the first ciphertext data to the key changing device, such that the key changing device performs external authentication based on the first ciphertext data, and in response to determining that the external authentication is successful, the key changing device modifies a state value of a security state register corresponding to a directory of the new key to a first state value, wherein the first state value indicates that the new key under the directory to which the new key belongs is readable.

4. The method according to claim 1, wherein verifying whether the smart device has the second authority to change the target key in the secure element comprises:
performing external authentication on the secure element; and
in response to determining that the external authentication of the secure element is successful, determining that the smart device has the second authority to change the key in the secure element.

5. The method according to claim 4, wherein performing the external authentication on the secure element comprises:
sending a second random number generated by the secure element to the key changing device, such that the key changing device encrypts the second random number based on an authentication key stored in the key changing device to obtain a second ciphertext data corresponding to the second random number;
obtaining the second ciphertext data generated by the key changing device; and
sending an external authentication instruction carrying the second ciphertext data to the secure element, such that the secure element performs the external authentication based on the second ciphertext data, and in response to determining that the external authentication is successful, the secure element modifies a state value of a security state register corresponding to the designated directory to a second state value, wherein the second state value indicates that the target key under the designated directory is changeable.

6. The method according to any one of claims 1-5, wherein the key changing device comprises a central processing unit (CPU) card.

7. A system for changing a key in a secure element, comprising a key changing device (510) and a smart device (520) installed with the secure element, wherein
the key changing device is configured to:
after a connection between the key changing device and the smart device is established, send a key changing instruction to the smart device to change a target key under a designated directory in the secure element; and
the smart device is configured to:
receive the key changing instruction;
verify whether the smart device has a first authority to read a new key from the key changing device and whether the smart device has a second authority to change the target key in the secure element;
in response to determining that the smart device has the first authority and the second authority, read a new key stored in the key changing device; and
change the target key under the designated directory in the secure element to the new key, wherein the new key is written into the key changing device via a card writer in advance.

8. The system according to claim 7, wherein the smart device is configured to:
perform external authentication on the key changing device; and
in response to determining that the external authentication of the key changing device is successful, determine that the smart device has the first authority to read data from the key changing device.

9. The system according to claim 8, wherein
the smart device is configured to:
based on an encryption key stored in the secure element, encrypt a first random number generated by the key changing device to obtain a first ciphertext data corresponding to the first random number; and
send an external authentication instruction carrying the first ciphertext data to the key changing device; and
the key changing device is further configured to:
receive the first ciphertext data;
perform external authentication based on the first ciphertext data; and
in response to determining that the external authentication is successful, modify a state value of a security state register corresponding to the directory of the new key to a first state value, wherein the first state value indicates that the new key under the directory to which the new key belongs is readable.

10. The system according to claim 7, wherein the smart device is configured to:
perform external authentication on the secure element; and
in response to determining that the external authentication of the secure element is successful, determine that the smart device has the second authority to change the key in the secure element.

11. The system according to claim 10, wherein
the smart device is further configured to:
send a second random number generated by the secure element to the key changing device; and
the key changing device is further configured to:
encrypt the second random number based on an authentication key stored in the key changing device to obtain a second ciphertext data corresponding to the second random number; and
the smart device is further configured to:
obtain the second ciphertext data generated by the key changing device;
send an external authentication instruction carrying the second ciphertext data to the secure element, such that the secure element performs the external authentication based on the second ciphertext data, and in response to determining that the external authentication is successful, modifies a state value of a security state register corresponding to the designated directory to a second state value, wherein the second state value indicates that the target key under the designated directory is changeable.

12. The system according to any one of claims 7-11, wherein the key changing device comprises a central processing unit (CPU) card.

13. A computer device, comprising a processor, a communication interface, a memory, and a communication bus, wherein the processor, the communication interface, and the memory communicate with each other through the communication bus, the memory is configured to store a computer program, and the processor is configured to execute the computer program stored in the memory to achieve the method according to any one of claims 1 to 6.

14. A computer readable storage medium, wherein the storage medium stores a computer program, and when the computer program is executed by a processor, the method according to any one of claims 1 to 6 is implemented.

15. A computer program, when the computer program is executed by a processor, the method according to any one of claims 1 to 6 is implemented.

## Patentansprüche

1. Verfahren zum Ändern eines Schlüssels in einem sicheren Element, das auf eine intelligente Vorrichtung angewendet wird, die mit dem sicheren Element installiert ist, umfassend:
nachdem eine Verbindung zwischen einer Schlüsseländerungsvorrichtung und der intelligenten Vorrichtung aufgebaut ist, Erhalten (202) eines Schlüsseländerungsbefehls, der von der Schlüsseländerungsvorrichtung gesendet wird, wobei der Schlüsseländerungsbefehl eingerichtet ist, einen Zielschlüssel unter einem designierten Verzeichnis in dem sicheren Element zu ändern;
Verifizieren (204), ob die intelligente Vorrichtung eine erste Berechtigung hat, einen neuen Schlüssel von der Schlüsseländerungsvorrichtung zu lesen, und ob die intelligente Vorrichtung eine zweite Berechtigung hat, den Zielschlüssel in dem sicheren Element zu ändern;
als Reaktion auf das Bestimmen, dass die intelligente Vorrichtung die erste Berechtigung und die zweite Berechtigung hat, Lesen (206) des neuen Schlüssels, der in der Schlüsseländerungsvorrichtung gespeichert ist, wobei der neue Schlüssel über einen Kartenschreiber im Voraus in die Schlüsseländerungsvorrichtung geschrieben wird; und
Ändern (208) des Zielschlüssels in dem designierten Verzeichnis in dem sicheren Element auf den neuen Schlüssel.

2. Verfahren nach Anspruch 1, wobei das Verifizieren, ob die intelligente Vorrichtung die erste Berechtigung hat, den neuen Schlüssel von der Schlüsseländerungsvorrichtung zu lesen, umfasst:
Durchführen einer externen Authentifizierung an der Schlüsseländerungsvorrichtung; und
als Reaktion auf ein Bestimmen, dass die externe Authentifizierung der Schlüsseländerungsvorrichtung erfolgreich ist, Bestimmen, dass die intelligente Vorrichtung die erste Berechtigung hat, Daten von der Schlüsseländerungsvorrichtung zu lesen.

3. Verfahren nach Anspruch 2, wobei das Durchführen der externen Authentifizierung an der Schlüsseländerungsvorrichtung umfasst:
basierend auf einem Verschlüsselungsschlüssel, der in dem sicheren Element gespeichert ist, Verschlüsseln einer ersten Zufallszahl, die durch die Schlüsseländerungsvorrichtung generiert wird, um erste Chiffretextdaten zu erhalten, die der ersten Zufallszahl entsprechen; und
Senden eines externen Authentifizierungsbefehls, der die ersten Chiffretextdaten führt, an die Schlüsseländerungsvorrichtung, so dass die Schlüsseländerungsvorrichtung eine externe Authentifizierung basierend auf den ersten Chiffretextdaten durchführt, und als Reaktion auf ein Bestimmen, dass die externe Authentifizierung erfolgreich ist, die Schlüsseländerungsvorrichtung einen Zustandswert eines Sicherheitszustandsregisters, das einem Verzeichnis des neuen Schlüssels entspricht, auf einen ersten Zustandswert modifiziert, wobei der erste Zustandswert anzeigt, dass der neue Schlüssel in dem Verzeichnis, zu dem der neue Schlüssel gehört, lesbar ist.

4. Verfahren nach Anspruch 1, wobei das Verifizieren, ob die intelligente Vorrichtung die zweite Berechtigung hat, den Zielschlüssel in dem sicheren Element zu ändern, umfasst:
Durchführen einer externen Authentifizierung an dem sicheren Element; und
als Reaktion auf ein Bestimmen, dass die externe Authentifizierung des sicheren Elements erfolgreich ist, Bestimmen, dass die intelligente Vorrichtung die zweite Berechtigung hat, den Schlüssel in dem sicheren Element zu ändern.

5. Verfahren nach Anspruch 4, wobei das Durchführen der externen Authentifizierung an dem sicheren Element umfasst:
Senden einer zweiten Zufallszahl, die durch das sichere Element generiert wird, an die Schlüsseländerungsvorrichtung, so dass die Schlüsseländerungsvorrichtung die zweite Zufallszahl basierend auf einem Authentifizierungsschlüssel verschlüsselt, der in der Schlüsseländerungsvorrichtung gespeichert ist, um zweite Chiffretextdaten zu erhalten, die der zweiten Zufallszahl entsprechen;
Erhalten der zweiten Chiffretextdaten, die durch die Schlüsseländerungsvorrichtung generiert werden; und
Senden eines externen Authentifizierungsbefehls, der die zweiten Chiffretextdaten führt, an das sichere Element, so dass das sichere Element die externe Authentifizierung basierend auf den zweiten Chiffretextdaten durchführt, und als Reaktion auf ein Bestimmen, dass die externe Authentifizierung erfolgreich ist, das sichere Element einen Zustandswert eines Sicherheitszustandsregisters, das dem designierten Verzeichnis entspricht, auf einen zweiten Zustandswert modifiziert, wobei der zweite Zustandswert anzeigt, dass der Zielschlüssel unter dem designierten Verzeichnis änderbar ist.

6. Verfahren nach einem der Ansprüche 1-5, wobei die Schlüsseländerungsvorrichtung eine Karte einer zentralen Verarbeitungseinheit (CPU) umfasst.

7. System zum Ändern eines Schlüssels in einem sicheren Element, umfassend eine Schlüsseländerungsvorrichtung (510) und eine intelligente Vorrichtung (520), die mit dem sicheren Element installiert ist, wobei
die Schlüsseländerungsvorrichtung eingerichtet ist zum:
nachdem eine Verbindung zwischen der Schlüsseländerungsvorrichtung und der intelligenten Vorrichtung aufgebaut ist, Senden eines Schlüsseländerungsbefehls an die intelligente Vorrichtung, um einen Zielschlüssel unter einem designierten Verzeichnis in dem sicheren Element zu ändern; und
die intelligente Vorrichtung eingerichtet ist zum:
Empfangen des Schlüsseländerungsbefehls;
Verifizieren, ob die intelligente Vorrichtung eine erste Berechtigung hat, einen neuen Schlüssel von der Schlüsseländerungsvorrichtung zu lesen, und ob die intelligente Vorrichtung eine zweite Berechtigung hat, den Zielschlüssel in dem sicheren Element zu ändern;
als Reaktion auf ein Bestimmen, dass die intelligente Vorrichtung die erste Berechtigung und die zweite Berechtigung hat, Lesen eines neuen Schlüssels, der in der Schlüsseländerungsvorrichtung gespeichert ist; und
Ändern des Zielschlüssels in dem designierten Verzeichnis in dem sicheren Element auf den neuen Schlüssel, wobei der neue Schlüssel über einen Kartenschreiber im Voraus in die Schlüsseländerungsvorrichtung geschrieben wird.

8. System nach Anspruch 7, wobei die intelligente Vorrichtung eingerichtet ist zum:
Durchführen einer externen Authentifizierung an der Schlüsseländerungsvorrichtung; und
als Reaktion auf ein Bestimmen, dass die externe Authentifizierung der Schlüsseländerungsvorrichtung erfolgreich ist, Bestimmen, dass die intelligente Vorrichtung die erste Berechtigung hat, Daten von der Schlüsseländerungsvorrichtung zu lesen.

9. System nach Anspruch 8, wobei
die intelligente Vorrichtung eingerichtet ist zum:
basierend auf einem Verschlüsselungsschlüssel, der in dem sicheren Element gespeichert ist, Verschlüsseln einer ersten Zufallszahl, die durch die Schlüsseländerungsvorrichtung generiert wird, um erste Chiffretextdaten zu erhalten, die der ersten Zufallszahl entsprechen; und
Senden eines externen Authentifizierungsbefehls, der die ersten Chiffretextdaten führt, an die Schlüsseländerungsvorrichtung; und
die Schlüsseländerungsvorrichtung ferner eingerichtet ist zum:
Empfangen der ersten Chiffretextdaten;
Durchführen einer externen Authentifizierung basierend auf den ersten Chiffretextdaten; und
als Reaktion auf ein Bestimmen, dass die externe Authentifizierung erfolgreich ist, Modifizieren eines Zustandswerts eines Sicherheitszustandsregisters, das dem Verzeichnis des neuen Schlüssels entspricht, auf einen ersten Zustandswert, wobei der erste Zustandswert anzeigt, dass der neue Schlüssel in dem Verzeichnis, zu dem der neue Schlüssel gehört, lesbar ist.

10. System nach Anspruch 7, wobei die intelligente Vorrichtung eingerichtet ist zum:
Durchführen einer externen Authentifizierung an dem sicheren Element; und
als Reaktion auf ein Bestimmen, dass die externe Authentifizierung des sicheren Elements erfolgreich ist, Bestimmen, dass die intelligente Vorrichtung die zweite Berechtigung hat, den Schlüssel in dem sicheren Element zu ändern.

11. System nach Anspruch 10, wobei
die intelligente Vorrichtung ferner eingerichtet ist zum:
Senden einer zweiten Zufallszahl, die durch das sichere Element generiert wird, an die Schlüsseländerungsvorrichtung; und
die Schlüsseländerungsvorrichtung ferner eingerichtet ist zum:
Verschlüsseln der zweiten Zufallszahl basierend auf einem Authentifizierungsschlüssel, der in der Schlüsseländerungsvorrichtung gespeichert ist, um zweite Chiffretextdaten zu erhalten, die der zweiten Zufallszahl entsprechen; und die intelligente Vorrichtung ferner eingerichtet ist zum:
Erhalten der zweiten Chiffretextdaten, die durch die Schlüsseländerungsvorrichtung generiert werden;
Senden eines externen Authentifizierungsbefehls, der die zweiten Chiffretextdaten führt, an das sichere Element, so dass das sichere Element die externe Authentifizierung basierend auf den zweiten Chiffretextdaten durchführt, und als Reaktion auf ein Bestimmen, dass die externe Authentifizierung erfolgreich ist, Modifizieren eines Zustandswerts eines Sicherheitszustandsregisters, das dem designierten Verzeichnis entspricht, auf einen zweiten Zustandswert, wobei der zweite Zustandswert anzeigt, dass der Zielschlüssel unter dem designierten Verzeichnis änderbar ist.

12. System nach einem der Ansprüche 7-11, wobei die Schlüsseländerungsvorrichtung eine Karte einer zentralen Verarbeitungseinheit (CPU) umfasst.

13. Computervorrichtung, umfassend einen Prozessor, eine Kommunikationsschnittstelle, einen Speicher und einen Kommunikationsbus, wobei der Prozessor, die Kommunikationsschnittstelle und der Speicher über den Kommunikationsbus miteinander kommunizieren, der Speicher eingerichtet ist, ein Computerprogramm zu speichern, und der Prozessor eingerichtet ist, das in dem Speicher gespeicherte Computerprogramm auszuführen, um das Verfahren nach einem der Ansprüche 1 bis 6 zu erreichen.

14. Computerlesbares Speichermedium, wobei das Speichermedium ein Computerprogramm speichert, und wenn das Computerprogramm von einem Prozessor ausgeführt wird, das Verfahren nach einem der Ansprüche 1 bis 6 implementiert wird.

15. Computerprogramm, wobei, wenn das Computerprogramm von einem Prozessor ausgeführt wird, das Verfahren nach einem der Ansprüche 1 bis 6 implementiert wird.

## Revendications

1. Procédé de modification d'une clé dans un élément sécurisé, appliqué à un dispositif intelligent installé avec l'élément sécurisé, comprenant :
après qu'une connexion entre un dispositif de modification de clé et le dispositif intelligent est établie, l'obtention (202) d'une instruction de modification de clé envoyée par le dispositif de modification de clé, dans lequel l'instruction de modification de clé est configurée pour modifier une clé cible dans un répertoire désigné dans l'élément sécurisé ;
la vérification (204) si le dispositif intelligent a un premier pouvoir de lecture d'une nouvelle clé provenant du dispositif de modification de clé, et si le dispositif intelligent a un second pouvoir de modification de la clé cible dans l'élément sécurisé ;
en réponse à la détermination que le dispositif intelligent a le premier pouvoir et le second pouvoir, la lecture (206) de la nouvelle clé stockée dans le dispositif de modification de clé, dans lequel la nouvelle clé est écrite dans le dispositif de modification de clé via un enregistreur de carte à l'avance ; et
la modification (208) de la clé cible dans le répertoire désigné dans l'élément sécurisé en la nouvelle clé.

2. Procédé selon la revendication 1, dans lequel la vérification si le dispositif intelligent a le premier pouvoir de lecture de la nouvelle clé provenant du dispositif de modification de clé comprend :
l'exécution d'une authentification externe sur le dispositif de modification de clé ; et
en réponse à la détermination que l'authentification externe du dispositif de modification de clé est réussie, la détermination que le dispositif intelligent a le premier pouvoir de lecture de données provenant du dispositif de modification de clé.

3. Procédé selon la revendication 2, dans lequel l'exécution de l'authentification externe sur le dispositif de modification de clé comprend :
sur la base d'une clé de chiffrement stockée dans l'élément sécurisé, le chiffrement d'un premier nombre aléatoire généré par le dispositif de modification de clé pour obtenir des premières données de texte chiffré correspondant au premier nombre aléatoire ; et
l'envoi d'une instruction d'authentification externe comportant les premières données de texte chiffré au dispositif de modification de clé, de sorte que le dispositif de modification de clé effectue une authentification externe sur la base des premières données de texte chiffré, et en réponse à la détermination que l'authentification externe est réussie, le dispositif de modification de clé modifie une valeur d'état d'un registre d'état de sécurité correspondant à un répertoire de la nouvelle clé en une première valeur d'état, dans lequel la première valeur d'état indique que la nouvelle clé dans le répertoire auquel la nouvelle clé appartient est lisible.

4. Procédé selon la revendication 1, dans lequel la vérification si le dispositif intelligent a le second pouvoir de modification de la clé cible dans l'élément sécurisé comprend :
l'exécution d'une authentification externe sur l'élément sécurisé ; et
en réponse à la détermination que l'authentification externe de l'élément sécurisé est réussie, la détermination que le dispositif intelligent a le second pouvoir de modification de la clé dans l'élément sécurisé.

5. Procédé selon la revendication 4, dans lequel l'exécution de l'authentification externe sur l'élément sécurisé comprend :
l'envoi d'un second nombre aléatoire généré par l'élément sécurisé au dispositif de modification de clé, de sorte que le dispositif de modification de clé chiffre le second nombre aléatoire sur la base d'une clé d'authentification stockée dans le dispositif de modification de clé pour obtenir des secondes données de texte chiffré correspondant au second nombre aléatoire ;
l'obtention des secondes données de texte chiffré générées par le dispositif de modification de clé ; et
l'envoi d'une instruction d'authentification externe comportant les secondes données de texte chiffré à l'élément sécurisé, de sorte que l'élément sécurisé effectue l'authentification externe sur la base des secondes données de texte chiffré, et en réponse à la détermination que l'authentification externe est réussie, l'élément sécurisé modifie une valeur d'état d'un registre d'état de sécurité correspondant au répertoire désigné en une seconde valeur d'état, dans lequel la seconde valeur d'état indique que la clé cible dans le répertoire désigné est modifiable.

6. Procédé selon l'une quelconque des revendications 1 à 5, dans lequel le dispositif de modification de clé comprend une carte d'unité centrale de traitement (CPU).

7. Système de modification d'une clé dans un élément sécurisé, comprenant un dispositif de modification de clé (510) et un dispositif intelligent (520) installé avec l'élément sécurisé, dans lequel
le dispositif de modification de clé est configuré pour :
après qu'une connexion entre le dispositif de modification de clé et le dispositif intelligent est établie, envoyer une instruction de modification de clé au dispositif intelligent pour modifier une clé cible dans un répertoire désigné dans l'élément sécurisé ; et
le dispositif intelligent est configuré pour :
recevoir l'instruction de modification de clé ;
vérifier si le dispositif intelligent a un premier pouvoir de lecture d'une nouvelle clé provenant du dispositif de modification de clé et si le dispositif intelligent a un second pouvoir de modification de la clé cible dans l'élément sécurisé ;
en réponse à la détermination que le dispositif intelligent a le premier pouvoir et le second pouvoir, lire une nouvelle clé stockée dans le dispositif de modification de clé ; et
modifier la clé cible dans le répertoire désigné dans l'élément sécurisé en la nouvelle clé, dans lequel la nouvelle clé est écrite dans le dispositif de modification de clé via un enregistreur de carte à l'avance.

8. Système selon la revendication 7, dans lequel le dispositif intelligent est configuré pour :
exécuter une authentification externe sur le dispositif de modification de clé ; et
en réponse à la détermination que l'authentification externe du dispositif de modification de clé est réussie, déterminer que le dispositif intelligent a le premier pouvoir de lecture de données provenant du dispositif de modification de clé.

9. Système selon la revendication 8, dans lequel
le dispositif intelligent est configuré pour :
sur la base d'une clé de chiffrement stockée dans l'élément sécurisé, chiffrer un premier nombre aléatoire généré par le dispositif de modification de clé pour obtenir des premières données de texte chiffré correspondant au premier nombre aléatoire ; et
envoyer une instruction d'authentification externe comportant les premières données de texte chiffré au dispositif de modification de clé ; et
le dispositif de modification de clé est en outre configuré pour :
recevoir les premières données de texte chiffré ;
effectuer une authentification externe sur la base des premières données de texte chiffré ; et
en réponse à la détermination que l'authentification externe est réussie, modifier une valeur d'état d'un registre d'état de sécurité correspondant au répertoire de la nouvelle clé en une première valeur d'état, dans lequel la première valeur d'état indique que la nouvelle clé dans le répertoire auquel la nouvelle clé appartient est lisible.

10. Système selon la revendication 7, dans lequel le dispositif intelligent est configuré pour :
effectuer une authentification externe sur l'élément sécurisé ; et
en réponse à la détermination que l'authentification externe de l'élément sécurisé est réussie, déterminer que le dispositif intelligent a le second pouvoir de modification de la clé dans l'élément sécurisé.

11. Système selon la revendication 10, dans lequel
le dispositif intelligent est en outre configuré pour :
envoyer un second nombre aléatoire généré par l'élément sécurisé au dispositif de modification de clé ; et
le dispositif de modification de clé est en outre configuré pour :
chiffrer le second nombre aléatoire sur la base d'une clé d'authentification stockée dans le dispositif de modification de clé pour obtenir des secondes données de texte chiffré correspondant au second nombre aléatoire ; et
le dispositif intelligent est en outre configuré pour :
obtenir les secondes données de texte chiffré générées par le dispositif de modification de clé ;
envoyer une instruction d'authentification externe comportant les secondes données de texte chiffré à l'élément sécurisé, de sorte que l'élément sécurisé effectue l'authentification externe sur la base des secondes données de texte chiffré, et en réponse à la détermination que l'authentification externe est réussie, modifier une valeur d'état d'un registre d'état de sécurité correspondant au répertoire désigné en une seconde valeur d'état, dans lequel la seconde valeur d'état indique que la clé cible dans le répertoire désigné est modifiable.

12. Système selon l'une quelconque des revendications 7 à 11, dans lequel le dispositif de modification de clé comprend une carte d'unité centrale de traitement (CPU).

13. Dispositif informatique, comprenant un processeur, une interface de communication, une mémoire et un bus de communication, dans lequel le processeur, l'interface de communication et la mémoire communiquent les uns avec les autres par l'intermédiaire du bus de communication, la mémoire est configurée pour stocker un programme informatique, et le processeur est configuré pour exécuter le programme informatique stocké dans la mémoire pour réaliser le procédé selon l'une quelconque des revendications 1 à 6.

14. Support de stockage lisible par ordinateur, dans lequel le support de stockage stocke un programme informatique, et lorsque le programme informatique est exécuté par un processeur, le procédé selon l'une quelconque des revendications 1 à 6 est mis en oeuvre.

15. Programme informatique, lorsque le programme informatique est exécuté par un processeur, le procédé selon l'une quelconque des revendications 1 à 6 est mis en oeuvre.
